# EUROPEAN PATENT SPECIFICATION

(11) **EP 1 388 989 B1**
(45) Date of publication and mention of the grant of the patent: **16.08.2006**
(21) Application number: 03012240.2
(22) Date of filing: 10.06.2003
(51) Int. Cl.: H04L 29/06, G06F 1/00

(54) **Digital contents issuing system and digital contents issuing method**
Vorrichtung und Verfahren zur Ausgabe von digitalen Inhalten
Système et méthode de délivrance de contenus numériques

(30) Priority: 10.06.2002 JP 2002169227
(43) Date of publication of application: 11.02.2004
(73) Proprietor: Sakamura, Ken, Tokyo 141-0032 (JP); Koshizuka, Noboru, Musashino-shi, Tokyo 180-0013 (JP); NTT DoCoMo, Inc., Tokyo 100-6150 (JP)
(72) Inventor: Sakamura, Ken, Shinagawa-ku, Tokyo (JP); Koshizuka, Noboru, Musashino-shi, Tokyo (JP); Mori, Kensaku, Int. Prop. Dept., NTT DoCoMo, Inc, Chiyoda-ku, Tokyo (JP); Ishii, Kazuhiko, Int. Prop. Dept., NTT DoCoMo, Inc, Chiyoda-ku, Tokyo (JP); Aono, Hiroshi, Int. Prop. Dept., NTT DoCoMo, Inc, Chiyoda-ku, Tokyo (JP); Hongo, Sadayuki, Int. Prop. Dept., NTT DoCoMo, Inc, Chiyoda-ku, Tokyo (JP)
(74) Representative: HOFFMANN EITLE

(56) References cited:
- EP-A- 0 795 844
- US-A- 6 005 942

## Description

### CROSS REFERENCE TO RELATED APPLICATION

This application is based upon and claims the benefit of priority from the prior Japanese Patent Application No. P2002-169227, filed on June 10, 2002.

### BACKGROUND OF THE INVENTION

### 1. Field of the Invention

The present invention relates to a digital contents issuing system and a digital contents issuing method for issuing digital contents such as electronic moneys.

### 2. Description of the Related Art

In US-A-6,005,942 there is described a system and method for a multi application smart card which has the option to facilitate post-issuance download of an application into the smart card. In other words, this document relates to addition of applications during the lifetime of a card after the card has already been issued.

Also, in EP 0 795 844 Al there is described a method of secure modification of data on a smart card relying on the use of a series of interrelated authentication values and the use of commands which are provided with an authentication code.

Conventionally, the technology for issuing digital contents such as electronic moneys to media such as an IC card, and transmitting and exchanging digital contents between IC cards, is known.

However, there is a danger that the digital contents comprised of data can be copied or created by fraudulent means while being transmitted. Therefore it is necessary to prevent the fraudulent copying and creation of the digital contents which have the same function as marketable securities.

### BRIEF SUMMARY OF THE INVENTION

In viewing of the foregoing, it is an object of the present invention to provide a digital contents issuing system and a digital contents issuing method which prevent the fraudulent copying and creation of the digital contents.

A first aspect of the present invention is outlined in claim 1 a digital contents issuing system for issuing digital contents to be stored in an IC card. The digital contents issuing system comprises a first server and a second server. The second server is configured to carry out an authentication regarding whether the first server has the authority to execute a command or not. The first server is configured to execute the command so as to create and store the digital contents in the IC card, when the first server is authenticated, and found to have the authority.

A second aspect of the present invention is outlined in claim 8 as a digital contents issuing method for issuing digital contents to be stored in an IC card. The digital contents issuing method comprises the step of carrying out, in a server, an authentication regarding whether another server has the authority to execute a command or not; and the step of executing, in the other server, the command so as to create and store the digital contents in the IC card, when the other server is authenticated, and found to have the authority.

In the first and second aspect of the present invention, the second server may transmit a confirmation signal showing the result of the authentication based on the first server ID and the command ID transmitted from the first server. The first server may execute the command based on the received confirmation signal, so as to create and store the digital contents in the IC card.

In the first and second aspect of the present invention, the first server may execute the command so as to create and store the digital contents in the IC card, when the first server stores the authority acquired from the second server.

In the first and second aspect of the present invention, the second server may transmit the command and the authority to the first server, when the first server is authenticated, and found to have the authority according to the result of the authentication based on the first server ID and the command ID transmitted from the first server.

A third aspect of the present invention is outlined in claim 6 a digital contents issuing system for issuing digital contents to be stored in an IC card. The digital contents issuing system comprises a first server and a second server. The second server is configured to encrypt a command using a server ID of the first server and transmits the encrypted command to the first server. The first server is configured to decrypt the encrypted command transmitted from the second server using the server ID of first server, and execute the decrypted command so as to create and store the digital contents in the IC card.

A fourth aspect of the present invention is outlined in claim 9 as a digital contents issuing method for issuing digital contents to be stored in an IC card. The digital contents issuing method comprises the step of encrypting, in a server, a command using a server ID of another server and transmitting the encrypted command to the other server; and the step of decrypting, in the other server, the encrypted command transmitted from the server using the server ID of the other server, and executing the decrypted command so as to create and store the digital contents in the IC card.

In the third and fourth aspect of the present invention, the second server may transmit the encrypted command to the first server, when the first server is authenticated, and found to have the authority to execute the command according to the result of an authentication based on the first server ID and the command ID transmitted from the first server.

In the third and fourth aspect of the present invention, the first server may be equipped with a chip including a circuit in which the command is implemented.

### BRIEF DESCRIPTION OF THE SEVERAL VIEWS OF THE DRAWINGS

FIG. 1 is a diagram for explaining the general outlines of a digital contents issuing system according to a first embodiment of the present invention.
FIG. 2 is a diagrammatic sketch of the digital contents issuing system according to the first embodiment.
FIG. 3 is a functional block diagram of the digital contents issuing system, in which an IC card is inserted according to the first embodiment.
FIG. 4 is a sequence diagram illustrating the operation of the digital contents issuing system according to the first embodiment.
FIG. 5 is a diagram for explaining the operation of the digital contents issuing system according to the first embodiment.
FIG. 6 is a diagram for explaining the general outlines of a digital contents issuing system according to a second embodiment of the present invention.
FIG. 7 is a diagrammatic sketch of the digital contents issuing system according to the second embodiment.
FIG. 8 is a sequence diagram illustrating the operation of the digital contents issuing system according to the second embodiment.
FIG. 9 is a diagram for explaining the general outlines of a digital contents issuing system according to a third embodiment of the present invention.
FIG. 10 is a diagrammatic sketch of the digital contents issuing system according to the third embodiment.
FIG. 11 is a diagram for explaining the general outlines of a digital contents issuing system according to a fourth embodiment of the present invention.
FIG. 12 is a diagrammatic sketch of the digital contents issuing system according to the fourth embodiment.
FIG. 13 is a sequence diagram illustrating the operation of the digital contents issuing system according to the fourth embodiment.

### DETAILED DESCRIPTION OF THE INVENTION

### <A first embodiment of the present invention>

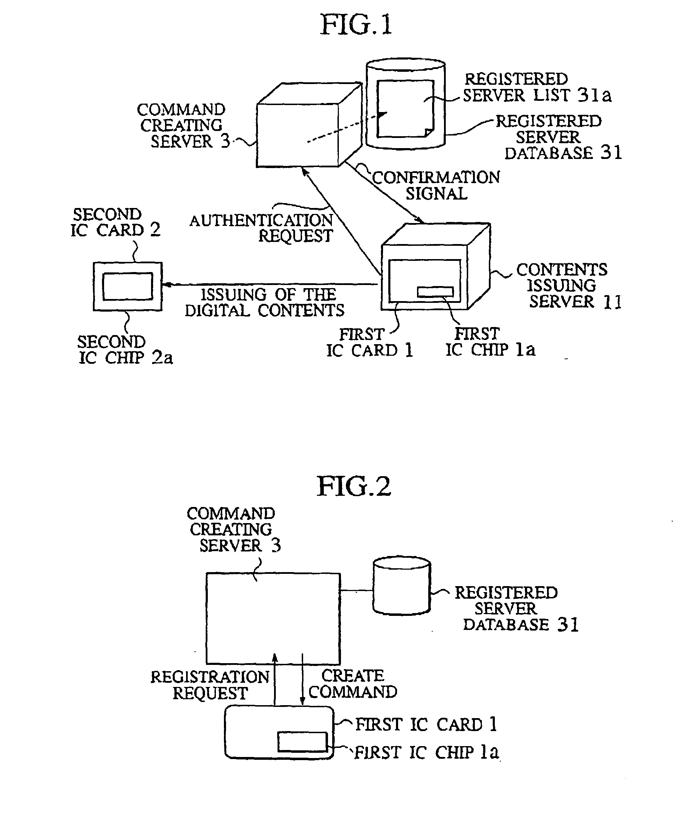

A digital contents issuing system according to a first embodiment of the present invention will be described in detail below. FIGS. 1 to 4 show a configuration of the digital contents issuing system according to the first embodiment.

As shown in FIG. 1, the digital contents issuing system is configured with a contents issuing server (first server) 11 and a command creating server (second server) 3. The command creating server 3 is connected to a registered server database 31 which contains registered server lists 31a.

As shown in FIG. 1, the first IC chip 1a on the first IC card 1 may have the function of the contents issuing server 11 according to the present invention.

The contents issuing server 11 is configured to issue the digital contents such as electronic moneys to the IC card 2. In other words, the contents issuing server 11 is configured to create the digital contents and transfer the created digital contents to the IC card 2. The transferred digital contents are stored in the IC card 2.

The contents issuing server 11 executes the CREATE command acquired from the command creating server 3, so as to transfer the digital contents to the IC card 2. As shown in Fig. 2, the first IC chip 1a having the function of the contents issuing server 11 transmits a registration request to the command creating server 3, and the command creating server 3 issues the CREATE command to the contents issuing server 11 to which the registration is authorized. The CREATE command is an executable program.

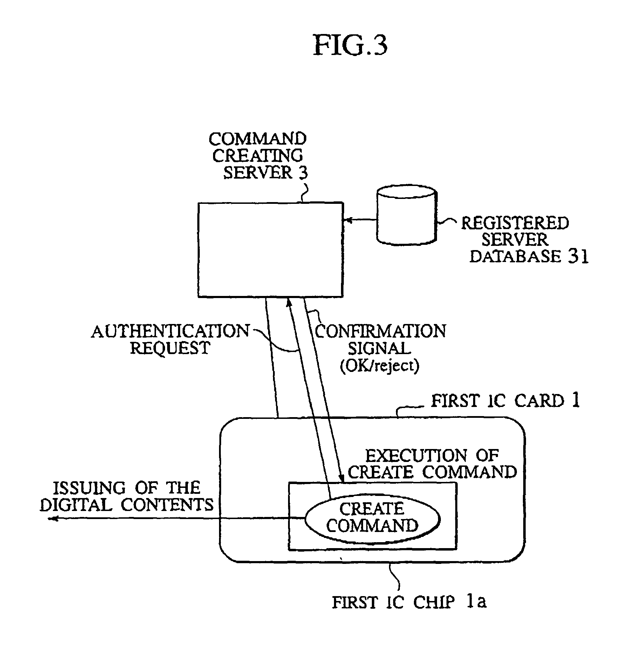

As shown in FIG. 3, when the contents issuing server 11 executes the CREATE command, an authentication request is transmitted to the command creating server 3. The command creating server 3 carries out an authentication regarding whether the contents issuing server 11 has the authority to execute a command or not, according to the received authentication request. In other words, the command creating server 3 carries out the authentication regarding whether the CREATE authority relating to the received authentication request exists in the registered server database 31 or not. The CREATE command is executed when the CREATE authority has been issued. On the other hand, the CREATE command is rejected for execution when the CREATE authority has not been issued.

As shown in Fig. 3, the first IC chip 1a having the function of the contents issuing server 11 confirms the result of the authentication in the command creating server 3 according to the first embodiment, based on a confirmation signal (OK/reject) transmitted from the command creating server 3.

In other words, the contents issuing server 11, which creates the digital contents, executes the CREATE command so as to transmit the authentication request (contents creation request) to the command creating server 3. The contents issuing server 11 acquires the confirmation signal (OK) from the command creating server 3 so as to create the digital contents.

The contents issuing server 11 transmits the registration request to the command creating server 3, and acquires the CREATE command from the command creating server 3, before creating the digital contents. The command creating server 3 issues the CREATE authority relating to the CREATE command according to the registration. The issued CREATE authority is managed in the registered server database 31.

The contents issuing server 11 transmits the authentication request (contents creation request) to the command creating server 3, and acquires the CREATE authority from the command creating server 3, before creating the digital contents. The contents issuing server 11 transmits private information (server information), signature information of the contents issuing server 11 and the command ID together with The contents creation request to the command creating server 3. The server information contains the contents issuing server ID, and the command ID identifies the CREATE command.

The command creating server 3 is configured to create and manage the CREATE command and the CREATE authority which are used for issuing the digital contents.

As shown in FIG. 2, to be more specific, the command creating server 3 is configured to create the CREATE command and transmit the created CREATE command to the contents issuing server 11. The command creating server 3 is configured to issue and manage the CREATE authority relating to the issued CREATE command. The command creating server 3 manages the CREATE authority using the registered server lists 31a stored in the registered server database 31.

As shown in FIG. 1 and 3, the command creating server 3 which has received the contents creation request and various information from the contents issuing server 11 carries out the authentication regarding whether the contents issuing server 11 has the authority to create the digital contents. The command creating server 3 registers the server information (contents issuing server ID) in the registered server lists 31a, and transmits the CREATE command to the contents issuing server 11, when the contents issuing server 11 is authenticated, and found to have the authority to create the digital contents.

As shown in FIG. 1 and 3, the command creating server 3 refers to the registered server lists 31a so as to carry out the authentication of the contents creation request transmitted from the contents issuing server and return the confirmation signal (OK) to only the contents issuing server which has been authenticated, and found to have the authority to create the digital contents.

### (Configuration of the contents issuing server and the first IC card)

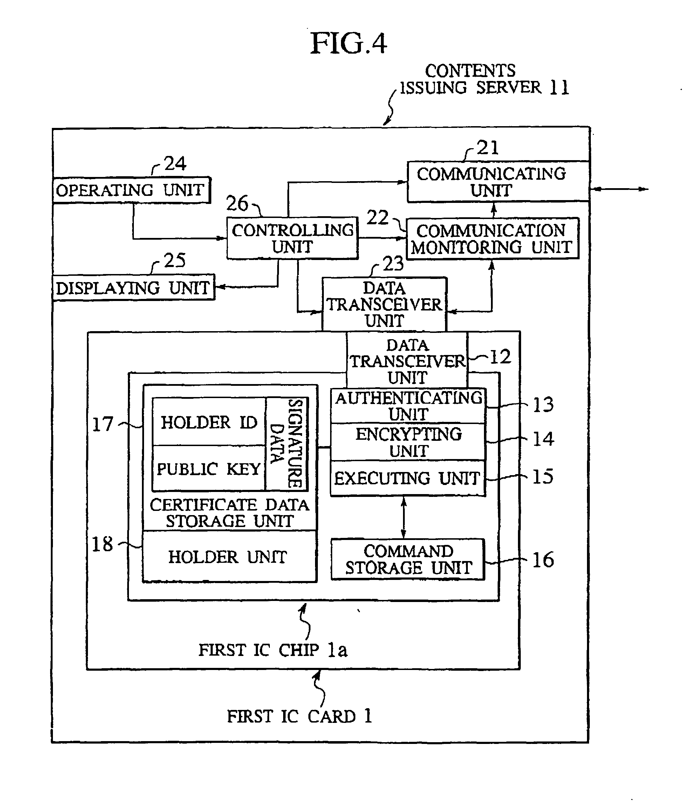

As shown in FIG. 4, the first IC card 1 is equipped with first IC chip 1a and inserted into the contents issuing server 11. The first IC card 1 transmits and receives data to/from the contents issuing server 11 based on an instruction from the contents issuing server 11.

FIG. 4 illustrates an internal configuration of the first IC card 1 and the contents issuing server 11. As shown in FIG. 4, the first IC card 1 is equipped with the first IC chip 1a, and the data transceiver unit 12 which transmits and receives data in the first IC chip 1a to/from the contents issuing server 11.

In the first embodiment, the first IC card 1 is not a computer peripheral device which is operated using a reader-writer, but is designed as a node in a distributed environment. The first IC card 1 can communicate with a chip on a service providing module in a peer-to-peer network.

The first IC chip 1a is an LSI (large-scale integration) circuit having a tamper resistance. The first IC chip 1a is configured with a processing unit, a memory and the like. The first IC chip 1a is implemented in hardware such as an IC card, a smart card, or a mobile terminal.

The contents issuing server 11, in which the first IC card 1 can be inserted, comprises a reader-writer function for reading and writing data from/to the first IC card 1. The contents issuing server 11 functions as a gateway (bridge) which acts as a bridge between physical layers of contact-less communication in the communication network such as a LAN. To be more specific, the contents issuing server 11 may be a PDA (Personal Digital Assistant) terminal, a mobile terminal and the like.

The first IC chip 1a is configured with an authenticating unit 13, an encrypting unit 14, an executing unit 15, a command storage unit 16, a certificate data storage unit 17 and a holder unit 18.

The authenticating unit 13 is a processing device which carries out a mutual authentication between the first IC card 1 and another IC card (destination), when the first IC card 1 starts communication with the destination.

To be more specific, the authenticating unit 13 of the first IC card 1 acquires certificate data of the destination from the destination, before issuing the digital contents The authenticating unit 13 verifies the certificate data of the destination based on the holder ID and the signature data of the destination in the acquired certificate data, and transmits the certificate data of the first IC card 1 to the destination. The authenticating unit 13 acquires the authentication confirming notification (confirmation signal) showing that the certificate data of the first IC card 1 has been verified from the destination.

In the first embodiment, the authenticating unit 13 acquires a session ID and a specified session mode, and sets an access level for accessing the digital contents stored in the holder unit 18 according to the acquired session ID and session mode when the mutual authentication is carried out. The session ID identifies the communication (session) established when the mutual authentication is carried out.

In the first embodiment, the session mode, which includes an information issuer mode and an owner mode is specified when the mutual authentication is carried out. Each session mode has a different authentication algorithm.

The session mode according to the first embodiment is as follows.

### (1) The information issuer mode

In the information issuer mode, an accessing entity (the IC card) which wishes to access the digital contents is authorized as an issuer of the digital contents. The accessing entity can access the digital contents created by the issuer with the authority of the issuer and access the other digital contents with other authority, after being authorized in the information issuer mode.

### (2) The owner mode

In the owner mode, the accessing entity is authorized as an owner of the digital contents. In the first embodiment, an easily manageable authentication means such as a password, is used in the owner mode. The accessing entity which is authorized is the owner mode has the authority of the owner.

The encrypting unit 14 is configured to encrypt the digital contents stored in the holder unit 18 of the first IC card 1. The digital contents are transmitted to the contents issuing server 11 via the data transceiver unit 12, after being encrypted in the encrypting unit 14.

The executing unit 15 is a processing device which invokes a command (for example, a CREATE command) from the command storage unit 16 based on the predetermined trigger signal from outside, carries out an encryption process, and a transmission process of the digital contents. In the first embodiment, the controlling unit 26 outputs the trigger signal based on the operation signal from the operating unit 24.

The executing unit 15 is configured to work together with the authenticating unit 13. The executing unit 15 executes the command, when the IC card of the destination is verified and the authentication confirming notification is received from the IC card of the destination in the authenticating unit 13, so that the mutual authentication is successful.

The command storage unit 16 is a storage device such as a memory which stores the commands. When the executing unit 15 executes the command, the encrypting unit 14 encrypts the digital contents stored in the holder unit 18 and the data transceiver unit 12 transmits the digital contents.

The certificate storage unit 17 is a storage device such as a memory which stores the certificate data relating to the digital contents stored in the holder unit 18. When the authenticating unit 13 carries out the mutual authentication and the encrypting unit 14 carries out the encryption, the necessary holder ID, key information (a public key), and signature data are read from the certificate storage unit 17. The contents of the certificate data will be described later.

The holder unit 18 is a computer entity which exchanges information with other IC cards. The holder unit 18 is a memory which has a tamper resistance and stores the digital contents.

The data transceiver unit 12 is a communication device which transmits the certificate data and the encrypted digital contents to the outside. The data transceiver unit 12 transmits and receives data with the contact communication or the contact-less communication. In the first embodiment, the data transceiver unit 12 makes contact with the data transceiver unit 23 of the contents issuing server 11 so as to transmit and receive data, in a state wherein the first IC card 1 is inserted in the contents issuing server 11.

As shown in FIG. 4, the contents issuing server 11 is configured with a communicating unit 21, a communication monitoring unit 22, a data transceiver unit 23, an operating unit 24, a displaying unit 25 and a controlling unit 26.

The communicating unit 21 is a communication device for transmitting and receiving data.

The communication monitoring unit 22 is a device for monitoring a state of the communication of the communicating unit 21. The communication monitoring unit 22 measures how much time has elapsed since the most recent data transmission, judges that the communication has been interrupted in a case where there is no response from the destination after the expiration of a predetermined time interval, and transmits the judgment to the executing unit 15 of the first IC card 1 via the data transceiver units 23 and 12.

The data transceiver unit 23 is configured to make contact with the data transceiver unit 12 of the first IC card 1 inserted in the contents issuing server 11, and to transmit and receive data to/from the data transceiver unit 12.

For example, the operating unit 24 is a button or a stick placed on the surface of the contents issuing server 11. The operating unit 24 is an operating device for inputting various signals to the controlling unit 26 according to the operation of the operator.

For example, the displaying unit 25 is a display device such as a liquid crystal display placed on the surface of the contents issuing server 11. The displaying unit 25 displays the state of the communication of the communicating unit 21 and the result of the operation of the operating unit 24. Especially, the displaying unit 25 reads and displays information relating to the digital contents from the holder unit 18, based on the session ID and the specified session mode, in the first embodiment. The session ID identifies the communication (session) established between the first IC card 1 and the destination (another IC card).

The controlling unit 26 is a CPU (central processing unit) for controlling units 21 to 25 of the contents issuing server 11. Especially, the controlling unit 26 outputs a predetermined trigger signal to the executing unit 15. The predetermined trigger signal starts the execution process of the command in the executing unit 15 according to the operation signal from the operating unit 24.

### (Digital contents)

Various applications for storing the digital contents may be implemented in an IC card. For example, the digital contents can include the following.
- Information which an owner of the IC chip 1a cannot change, but, an information issuer can change (for example, a seat number in an electronic ticket)
- Information which the owner cannot see (for example, key information for changing the electronic ticket)
- Information which only the owner can control completely (for example, private information of the owner)
- Information which everybody can read

The digital contents are issued by a third party organization, stored in the IC card 1 together with the certificate data.

### (Certificate data)

The certificate data includes a holder ID, signature data and a public key. The holder ID identifies the digital contents stored in the holder unit 18. The certificate data issuer can assure the validity of the certificate data using the signature data. The public key is associated with the digital contents.

The holder ID is a unique identification assigned in the whole distributed system. The holder ID does not only identify the IC card physically, but is also used in routing control in the distributed system, and identifies the correspondent in the mutual authentication. That is to say, the holder ID is used in the authentication of an IC card or a service client, and the routing control of messages and the like in the network. In the first embodiment, the holder ID is constituted of 16 octets (128 bits).

### (Command)

The executing unit 15 starts to execute the command stored in the command storage unit 16 after receiving the predetermined trigger signal from the contents issuing server 11. The command has an atomic characteristic in that the executed command carries out a series of processes independently of the operation in the contents issuing server 11.

The series of processes include the following.
(1) An authentication process
(2) An encryption process
(3) A transmission process (An exchange process)
(4) A transmission completion confirmation process (An exchange completion confirmation process)
(5) A digital contents deletion process

That is to say, the command stores the states of units 12 to 18 of the first IC card 1 in the executing unit 15 of the first IC card 1, before the transmission of the digital contents.

The command deletes the digital contents stored in the holder unit 18, when receiving a commitment instruction for notifying that a reception process of the digital contents is completed in the destination, after the transmission of the digital contents.

The command reads the states stored in the executing unit 15 and carries out a roll-back process to return units 12 to 18 to their original states before the transmission of the digital contents, when communication is interrupted during the transmission of the digital contents.

On the other hand, the command stores the states of units 12 to 18 of the destination in the executing unit 15 of the destination. The command returns units 12 to 18 of the destination to their original states before the transmission of the digital contents, when transmission of the digital contents is interrupted.

### (Operation)

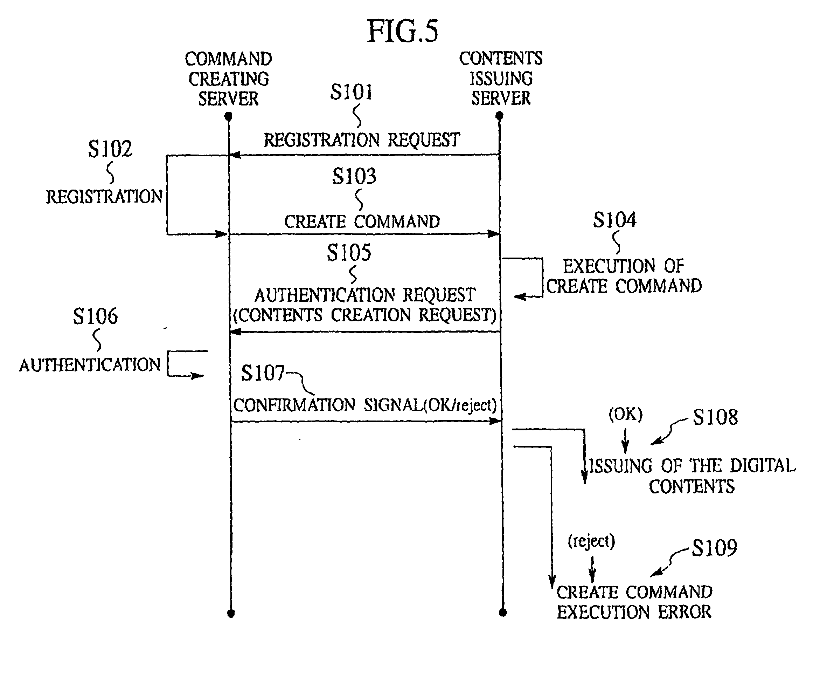

The digital contents issuing method using the digital contents issuing system according to the first embodiment will be explained. FIG. 5 illustrates the sequence of the digital contents issuing method according to the first embodiment.

As shown in FIG. 5, the contents issuing server 11 transmits the registration request including server information to the command creating server 3 (S101).

In step S102, the command creating server 3, which has received the registration request, verifies the contents issuing server 11 based on the server information. The command creating server 3 registers the server information (for example, the server name) relating to the contents issuing server 11 in the registered server list 31a, when the contents issuing server 11 is authenticated, and found to have the authority for creating the digital contents. In step S103, the command creating server 3 transmits the CREATE command to the contents issuing server 11.

In step S104, the contents issuing server 11 starts to execute the CREATE command. In step S105, the contents issuing server 11 transmits the contents creation request (the authentication request) including the server information (private information) and the signature data of the contents issuing server 11 to the command creating server 3.

In step S106 the command creating server 3 carries out the authentication regarding whether the CREATE authority relating to the CREATE command exists in the registered server lists 31a. In step S107, the command creating server 3 transmits the result of the authentication to the contents issuing server 11 as the confirmation signal.

In step S108, the contents issuing server 11 issues (creates and transmits) the digital contents, when acquiring the confirmation signal (OK).

On the other hand, in step S109, the contents issuing server 11 does not issue the digital contents, but carries out an error process for the CREATE command, when acquiring the confirmation signal (reject).

### <A second embodiment of the present invention>

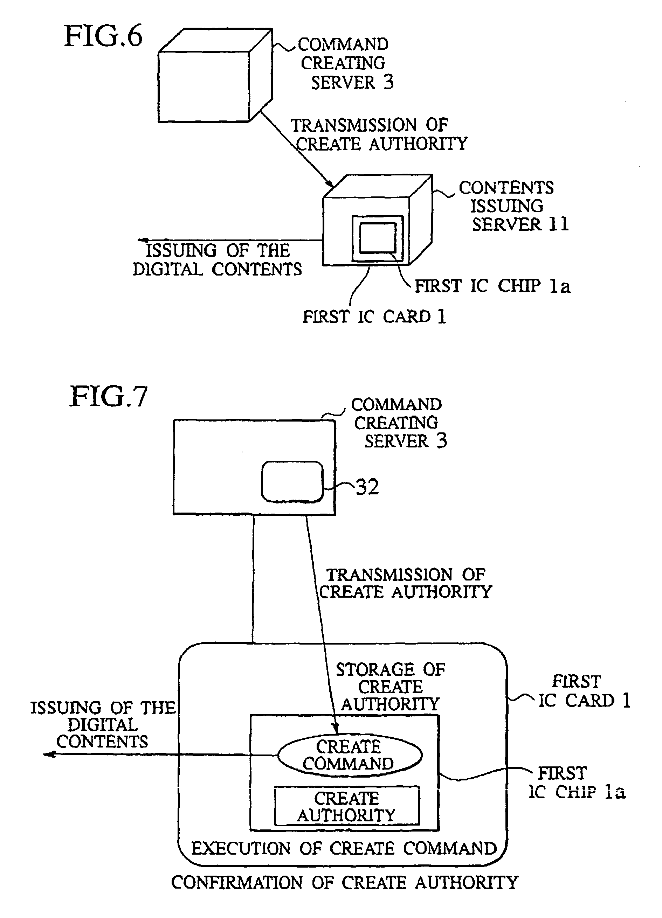

Referring to FIGS. 6 to 8, the second embodiment of the present invention will be described. FIGS. 6 and 7 illustrate the configuration of the digital contents issuing system according to the second embodiment. In the second embodiment, the command creating server 3 transmits the CREATE authority to the contents issuing server 11 together with the CREATE command.

As shown in FIGS. 6 and 7, the digital contents issuing system according to the third embodiment is configured with the contents issuing server (first server) 11 and the command creating server (second server) 3. The contents issuing server 11 is configured to issue the digital contents to the first IC card 1 or the second IC card 2. The command creating server 3 is configured to create and manage the CREATE command and the CREATE authority which are used in the issuing of the digital contents. The command creating server 3 comprises the creation authority managing means 32 for transmitting the CREATE command associated with the CREATE authority.

The contents issuing server 11 associates the CREATE command with the CREATE authority acquired from the command creating server 3 in the first IC card 1. When the CREATE command is executed, the contents issuing server 11 confirms whether the CREATE authority associated with the CREATE command is stored in the first IC card 1 or not, that is to say, it authenticates whether the contents issuing server has the authority for executing the CREATE command or not. The contents issuing server 11 issues the digital contents when the CREATE command is stored. The contents issuing server 11 carries out the error process when the CREATE command is not stored.

### (Operation)

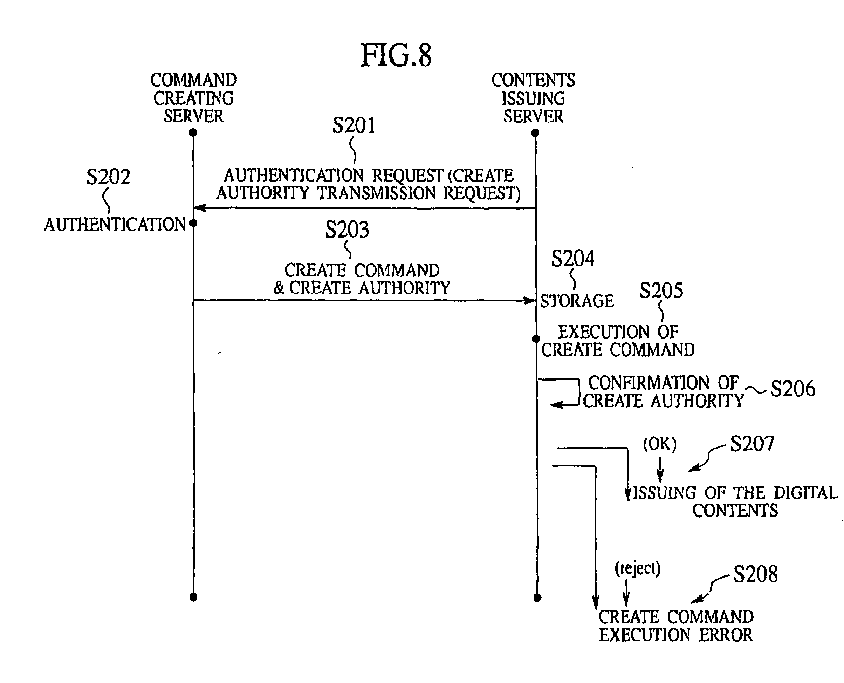

The digital contents issuing method using the digital contents issuing system according to the second embodiment will be explained. FIG. 8 illustrates the sequence of the digital contents issuing method according to the second embodiment.

As shown in FIG. 8, the contents issuing server 11 transmits the authentication request (CREATE authority transmission request) including server information to the command creating server 3 (S201).

In step S202, the command creating server 3 carries out the authentication regarding whether the contents issuing server 11 has the authority for issuing the digital contents (executing the CREATE command) based on the received server information.

In step S203, the command creating server 3 transmits the CREATE command and the CREATE authority to the contents issuing server 11, when the contents issuing server 11 is authenticated, and found to have the authority for executing the CREATE command. In step S204, the contents issuing server 11 stores the received CREATE command and CREATE authority in the first IC card 1 directly.

In step S205, the contents issuing server 11 starts to execute the CREATE command. In step S206, the contents issuing server 11 carries out the authentication regarding whether the CREATE authority relating to the CREATE command exists in the first IC card 1.

In step S207, the contents issuing server 11 issues (creates and transmits) the digital contents, when the CREATE authority is stored in the first IC card 1 (OK).

On the other hand, in step S208, the contents issuing server 11 does not issue the digital contents, but carries out an error process for the CREATE command, when the CREATE authority is not stored in the first IC card 1 (reject).

### <A third embodiment of the present invention>

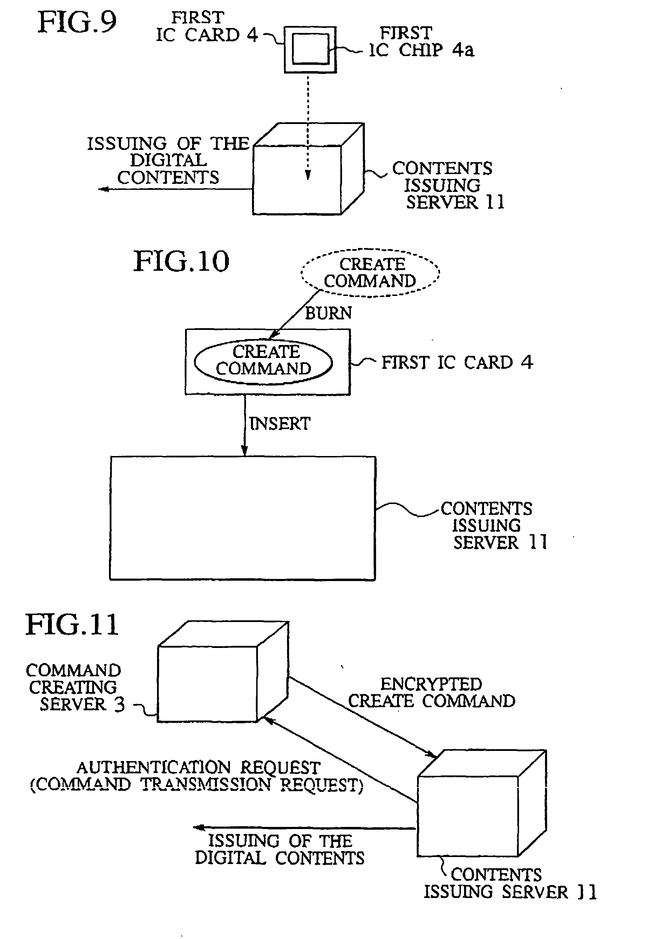

Referring to FIGS. 9 and 10, the third embodiment of the present invention will be described. FIGS. 9 and 10 illustrates the configuration of the digital contents issuing system according to the third embodiment.

As shown in FIG. 9 and 10, the digital contents issuing system according to the third embodiment is equipped with the contents issuing server 11 for issuing the digital contents to the first IC card 4. The first IC card 4 into which the CREATE command is burned is inserted into the contents issuing server 11. The contents issuing server 11 accesses the first IC card 4 to read and execute the CREATE command, before issuing the digital contents.

The first IC card 4 is equipped with a first IC chip 4a including a circuit in which the CREATE command is implemented physically. Therefore it is impossible to change the CREATE command in the first IC card 4 from the outside. To change the digital contents issuing system, it is necessary to change the first IC chip 4a.

### <A fourth embodiment of the present invention>

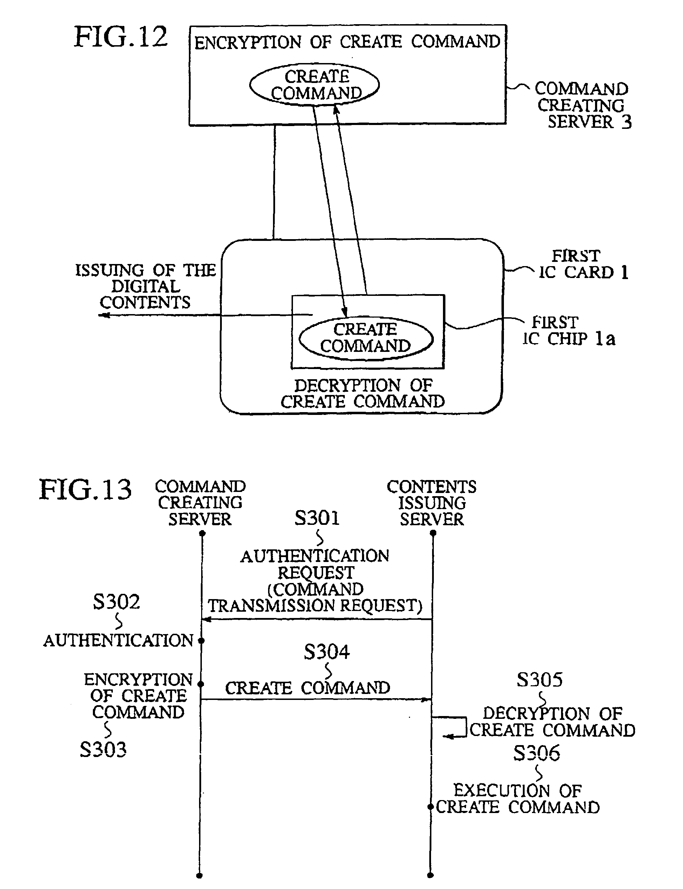

Referring to FIGS. 11 to 13, the fourth embodiment of the present invention will be described. FIGS. 11 and 12 illustrate the configuration of the digital contents issuing system according to the fourth embodiment. In the fourth embodiment, the command creating server 3 encrypts the CREATE command using the ID of the contents issuing server 11 which is authenticated, and found to have the authority for executing the CREATE command, and transmits the encrypted command to the contents issuing server 11.

As shown in FIGS. 11 and 12, the digital contents issuing system according to the fourth embodiment is configured with the contents issuing server (first server) 11 and the command creating server (second server) 3. The contents issuing server 11 is configured to issue the digital contents to the first IC card 1 or the second IC card 2. The command creating server 3 is configured to create the CREATE command which is used in the issuing of the digital contents. In the fourth embodiment, the command creating server 3 has a function of encrypting the CREATE command using the ID of the contents issuing server 11 which is authenticated, and found to have the authority for executing the CREATE command, and transmitting the encrypted command to the contents issuing server 11.

As shown in FIG. 13, the contents issuing server 11 transmits the authentication request (command transmission request) including the server information to the command creating server 3 (S301).

In step S302, the command creating server 3 carries out the authentication regarding whether the contents issuing server 11 has the authority for executing the CREATE command, that is to say, issuing the digital contents.

In step S303, the command creating server 3 encrypts the CREATE command using the ID of the contents issuing server 11, when the contents issuing server 11 is authenticated, and found to have the authority for issuing the digital contents. In step S304, the command creating server 3 transmits the encrypted CREATE command to the contents issuing server 11.

In step S305, the contents issuing server 11 stores the received CREATE command in the first IC card 1 directly. The contents issuing server 11 decrypts the encrypted CREATE command using the ID extracted from the server information in the first IC card 1. In step S306, the contents issuing server 11 executes the decrypted CREATE command so as to create and store the digital contents in the first IC card 1 or the second IC card 2.

### (The functions and effects of the present invention)

According to the prevent invention, it is possible to prevent the fraudulent copying and creation of the digital contents, by managing the contents issuing server 11 to which is issued, the CREATE command using the registered server lists 31a, and authenticating the CREATE authority relating to the contents issuing server 11 before executing the CREATE command.

According to the prevent invention, it is possible to prevent the fraudulent copying and creation of the digital contents without a third party organization such as the registered server database 31, by searching the CREATE authority which is required to execute the CREATE command in the first IC card 1.

According to the prevent invention, it is possible to prevent the fraudulent copying and creation of the digital contents, by burning the CREATE command into the IC chip.

According to the prevent invention, it is possible to prevent the fraudulent copying and creation of the digital contents, by transmitting the CREATE command to only the content issuing server which is authenticated, and found to have the authority for executing the CREATE command.

Additional advantages and modifications will readily occur to those skilled in the art. Therefore, the invention in its broader aspects is not limited to the specific details and the representative embodiment shown and described herein. Accordingly, various modifications may be made without departing from the scope of the general inventive concept as defined by the appended claims.

## Claims

1. A digital contents issuing system for issuing digital contents to be stored in an IC card (1, 2, 4), the system comprising
a first server (11); and
a second server (3) configured to carry out an authentication regarding whether said first server (11) has an authority to execute a command or not, and wherein
said first server (11) executes said command so as to create and store said digital contents in said IC card (1, 2, 4), when said first server (11) is authenticated by said second server (3), and found to have said authority.

2. The digital contents issuing system according to claim 1, wherein
said second server (3) transmits a confirmation signal showing a result of said authentication based on a server ID of said first server (11) and a command ID of said command transmitted from said first server (11), and
said first server (11) executes said command based on said received confirmation signal, so as to create and store said digital contents in said IC card (1, 2, 4).

3. The digital contents issuing system according to claim 1, wherein said first server (11) executes said command so as to create and store said digital contents in said IC card (1, 2, 4), when said first server (11) stores said authority acquired from said second server (3).

4. The digital contents issuing system according to claim 3, wherein said second server (3) transmits said command and said authority to said first server (11), when said first server (11) is authenticated, and found to have said authority according to a result of said authentication based on a server ID of said first server (11) and a command ID of said command transmitted from said first server (11).

5. The digital contents issuing system according to claim 1, wherein said first server (11) is equipped with an IC chip (4a) including a circuit in which said command is implemented.

6. A digital contents issuing system for issuing digital contents to be stored in an IC card (1, 2, 4), the system comprising:
a first server (11); and
a second server (3), and wherein
said second server (3) encrypts a command using a server ID of said first server (11) and transmits said encrypted command to said first server (11), and
said first server (11) decrypts said encrypted command transmitted from said second server (3) using said server ID of said first server (11), and executes said decrypted command so as to create and store said digital contents in said IC card (1, 2, 4).

7. The digital contents issuing system according to claim 5, wherein said second server (3) transmits said encrypted command to said first server (11), when said first server (11) is authenticated by said second server (3), and found to have an authority to execute said command according to a result of an authentication based on a server ID of said first server (11) and a command ID of said command transmitted from said first server (11).

8. A digital contents issuing method for issuing digital contents to be stored in an IC card (1, 2, 4), the method comprising the steps of:
carrying out, in a server (3), an authentication regarding whether another server (11) has an authority to execute a command or not; and
executing, in said other server (11), said command so as to create and store said digital contents in said IC card (1, 2, 4), when said other server (11) is authenticated by said server (3), and found to have said authority.

9. A digital contents issuing method for issuing digital contents to be stored in an IC card (1, 2, 4), the method comprising the steps of:
encrypting, in a server (3), a command using a server ID of another server (11) and transmitting said encrypted command to said other server (11); and
decrypting, in said other server (11), said encrypted command transmitted from said server (3) using said server ID of said other server (11), and executing said decrypted command so as to create and store said digital contents in said IC card (1, 2, 4).

## Patentansprüche

1. Herausgabesystem für digitalen Inhalt zum Herausgeben von digitalem Inhalt, der auf einer Karte für einen digitalen Schaltkreis (1, 2, 4) gespeichert werden soll, wobei das System umfasst:
einen ersten Server (11); und
einen zweiten Server (3), der konfiguriert ist zum Vornehmen einer Authentifizierung in Bezug darauf, ob der erste Server (11) eine Befugnis zum Ausführen eines Befehls hat oder nicht, und wobei
der erste Server (11) den Befehl ausführt, um den digitalen Inhalt zu erschaffen und in der Karte für einen integrierten Schaltkreis (1, 2, 4) zu speichern, wenn der erste Server (11) durch den zweiten Server (3) authentifiziert ist, und als für die Befugnis innehabend befunden worden ist.

2. Herausgabesystem für digitalen Inhalt gemäß Anspruch 1, wobei
der zweite Server (3) ein Bestätigungssignal übermittelt, das ein Ergebnis der Authentifizierung anzeigt basierend auf einer Server-ID des ersten Servers (11) und einer Befehls-ID des Befehls, übermittelt vom ersten Server (11), und
der erste Server (11) den Befehl ausführt basierend auf dem empfangenen Bestätigungssignal, um den digitalen Inhalt zu erschaffen und in der Karte für einen integrierten Schaltkreis (1, 2, 4) zu speichern.

3. Herausgabesystem für digitalen Inhalt gemäß Anspruch 1, wobei der erste Server (11) den Befehl ausführt, um den digitalen Inhalt zu erschaffen und in der Karte für einen integrierten Schaltkreis (1, 2, 4) zu speichern, wenn der erste Server (11) die von dem zweiten Server (3) akquirierte Befugnis speichert.

4. Herausgabesystem für digitalen Inhalt gemäß Anspruch 3, wobei der zweite Server (3) den Befehl und die Befugnis an den ersten Server (11) übermittelt, wenn der erste Server (11) authentifiziert ist, und als für die Befugnis innehabend befunden worden ist gemäß einem Ergebnis der Authentifizierung basierend auf einer Server-ID des ersten Servers (11) und einer Befehls-ID des Befehls, übermittelt von dem ersten Server (11):

5. Herausgabesystem für digitalen Inhalt gemäß Anspruch 1, wobei der erste Server (11) mit einem IC-Chip (4a) einschließlich eines Schaltkreises, in welchem der Befehl implementiert ist, ausgerüstet ist.

6. Herausgabesystem für digitalen Inhalt zum Herausgeben von digitalem Inhalt, der auf einer Karte für einen digitalen Schaltkreis (1, 2, 4) gespeichert werden soll, wobei das System umfasst:
einen ersten Server (11); und
einen zweiten Server (3), und wobei
der zweite Server (3) einen Befehl verschlüsselt unter Verwenden einer Server-ID des ersten Servers (11) und den verschlüsselten Befehl an den ersten Server (11) übermittelt, und
der erste Server (11) den von dem zweiten Server (3) übermittelten verschlüsselten Befehl entschlüsselt, unter Verwenden der Server-ID des ersten Servers (11), und den entschlüsselten Befehl ausführt, um den digitalen Inhalt zu erschaffen und in der Karte für einen integrierten Schaltkreis (1, 2, 4) zu speichern.

7. Herausgabesystem für digitalen Inhalt gemäß Anspruch 5, wobei der zweite Server (3) den verschlüsselten Befehl an den ersten Server (11) übermittelt, wenn der erste Server (11) durch den zweiten Server (3) authentifiziert ist, und als für eine Befugnis innehabend befunden worden ist zum Ausführen des Befehls gemäß einem Ergebnis einer Authentifizierung basierend auf einer Server-ID des ersten Servers (11) und einer Befehls-ID des Befehls, übermittelt von dem ersten Server (11).

8. Herausgabeverfahren für digitalen Inhalt zum Herausgeben von digitalem Inhalt, der auf einer Karte für einen digitalen Schaltkreis (1, 2, 4) gespeichert werden soll, wobei das Verfahren die Schritte umfasst zum:
Vornehmen, in einem Server (3), einer Authentifizierung in Bezug darauf, ob ein anderer Server (11) eine Befugnis zum Ausführen eines Befehls hat oder nicht; und
Ausführen, in dem anderen Server (11), des Befehls, um den digitalen Inhalt zu erschaffen und in der Karte für einen integrierten Schaltkreis (1, 2, 4) zu speichern, wenn der andere Server (11) durch den Server (3) authentifiziert ist, und als für die Befugnis innehabend befunden worden ist.

9. Herausgabeverfahren für digitalen Inhalt zum Herausgeben von digitalem Inhalt, der auf einer Karte für einen digitalen Schaltkreis (1, 2, 4) gespeichert werden soll, wobei das Verfahren die Schritte umfasst zum:
Verschlüsseln, in einem Server (3), eines Befehls, unter Verwenden einer Server-ID eines anderen Servers (11) und Übermitteln des verschlüsselten Befehls an den anderen Server (11); und
Entschlüsseln, in dem anderen Server (11), des von dem Server (3) übermittelten verschlüsselten Befehl, unter Verwenden der Server-ID des anderen Servers (11), und Ausführen des entschlüsselten Befehls, um den digitalen Inhalt zu erschaffen und in der Karte für einen integrierten Schaltkreis (1, 2, 4) zu speichern.

## Revendications

1. Système de sortie de contenus numériques pour fournir des contenus numériques à stocker dans une carte de CI (1, 2, 4), le système comprenant :
un premier serveur (11) ; et
un second serveur (3), configuré pour exécuter une authentification concernant le fait que ledit premier serveur (11) a une autorisation ou non d'exécuter un ordre, et dans lequel
ledit premier serveur (11) exécute ledit ordre de façon à créer et à stocker lesdits contenus numériques dans ladite carte de CI (1, 2, 4), lorsque ledit premier serveur (11) a été authentifié par ledit second serveur (3) et qu'il a été établi qu'il a ladite autorisation.

2. Système de sortie de contenus numériques selon la revendication 1, dans lequel
ledit second serveur (3) transmet un signal de confirmation, montrant un résultat de ladite authentification sur base d'une identification (ID) de serveur dudit premier serveur (11) et d'une ID d'ordre dudit ordre transmis à partir dudit premier serveur (11) , et
ledit premier serveur (11) exécute ledit ordre sur la base dudit signal de confirmation reçu, de façon à créer et à stocker lesdits contenus numériques dans ladite carte de CI (1, 2, 4).

3. Système de sortie de contenus numériques selon la revendication 1, dans lequel ledit premier serveur (11) exécute ledit ordre de façon à créer et à stocker lesdits contenus numériques dans ladite carte de CI (1, 2, 4), lorsque ledit premier serveur (11) stocke ladite autorisation, obtenue en provenance dudit second serveur (3).

4. Système de sortie de contenus numériques selon la revendication 3, dans lequel ledit second serveur (3) transmet ledit ordre et ladite autorisation audit premier serveur (11), lorsque ledit premier serveur (11) est authentifié et qu'il a été établi qu'il a ladite autorisation selon un résultat de ladite authentification sur base d'une ID de serveur dudit premier serveur (11) et d'une ID d'ordre dudit ordre transmis à partir dudit premier serveur (11).

5. Système de sortie de contenus numériques selon la revendication 1, dans lequel ledit premier serveur (11) est équipé d'une puce de CI (4a) incluant un circuit dans lequel ledit ordre est mis en oeuvre.

6. Système de sortie de contenus numériques pour fournir des contenus numériques à stocker dans une carte de CI (1, 2, 4), le système comprenant :
un premier serveur (11) ; et
un second serveur (3), et dans lequel
ledit second serveur (3) crypte un ordre en utilisant une ID de serveur dudit premier serveur (11), et transmet ledit ordre crypté audit premier serveur (11), et
ledit premier serveur (11) décrypte ledit ordre crypté, transmis à partir dudit second serveur (3) en utilisant ladite ID de serveur dudit premier serveur (11), et exécute ledit ordre décrypté, de façon à créer et à stocker lesdits contenus numériques dans ladite carte de CI (1, 2, 4).

7. Système de sortie de contenus numériques selon la revendication 5, dans lequel ledit second serveur (3) transmet ledit ordre crypté audit premier serveur (11), lorsque ledit premier serveur (11) est authentifié par ledit second serveur (3) et qu'il a été établi qu'il a une autorisation pour exécuter ledit ordre selon un résultat d'une authentification sur base d'une ID de serveur dudit premier serveur (11) et d'une ID d'ordre dudit ordre transmis à partir dudit premier serveur (11).

8. Procédé de sortie de contenus numériques pour fournir des contenus numériques à stocker dans une carte de CI (1, 2, 4), le procédé comprenant les étapes consistant à:
exécuter, dans un serveur (3), une authentification concernant le fait qu'un autre serveur (11) a une autorisation ou non d'exécuter un ordre ; et
exécuter, dans ledit autre serveur (11), ledit ordre de façon à créer et à stocker lesdits contenus numériques dans ladite carte de CI (1, 2, 4), lorsque ledit autre serveur (11) est authentifié par ledit serveur (3) et qu'il a été établi qu'il a ladite autorisation.

9. Procédé de sortie de contenus numériques pour fournir des contenus numériques à stocker dans une carte de CI (1, 2, 4), le procédé comprenant les étapes consistant à:
crypter, dans un serveur (3), un ordre en utilisant une ID de serveur d'un autre serveur (11), et transmettre ledit ordre crypté audit autre serveur (11) ; et
décrypter, dans ledit autre serveur (11), ledit ordre crypté à partir dudit serveur (3) en utilisant ladite ID de serveur dudit autre serveur (11), et exécuter ledit ordre décrypté, de façon à créer et à stocker lesdits contenus numériques dans ladite carte de CI (1, 2, 4).
